Europäisches Patentamt

European Patent Office

Office européen des brevets

(11) Publication number: **0 232 827**
**A2**

# EUROPEAN PATENT APPLICATION

(21) Application number: 87101404.9

(51) Int. Cl.⁴: **G 06 F 15/347**

(22) Date of filing: **03.02.87**

(30) Priority: **04.02.86 JP 22650/86**

(43) Date of publication of application: **19.08.87**
**Bulletin 87/34**

(84) Designated Contracting States: **DE FR GB**

(71) Applicant: **HITACHI, LTD., 6, Kanda Surugadai 4-chome Chiyoda-ku, Tokyo 100 (JP)**
Applicant: **Hitachi Computer Engineering Co., Ltd., 1, Horiyamashita, Hadano-shi Kanagawa-ken (JP)**

(72) Inventor: **Tanaka, Yoshikazu, 2-27-15, Sakae Ina-machi, Kitaadachi-gun Saitama-ken (JP)**
Inventor: **Iwasawa, Kyoko, 4-6-5, Nogata Nakano-ku, Tokyo (JP)**
Inventor: **Aoyama, Tomoo, 2209-106, Minamigaoka, Hadano-shi Kanagawa-ken (JP)**

(74) Representative: **Strehl, Schübel-Hopf, Groening, Schulz, Widenmayerstrasse 17 Postfach 22 03 45, D-8000 München 22 (DE)**

(54) **Vector processor.**

(57) A vector processor for processing a vector instruction, comprising a main storage (10) which has a plurality of banks ($B_0$ ... $B_3$), a plurality of vector registers (3), a plurality of memory requesters (6, 7) which transfer data between the vector registers (3) and the main storage (10), and a plurality of vector arithmetic units which subject vector data received from the vector registers (3), to vector operations and which send operated results to the vector registers (3). Stacks which store main storage access requests are provided in said memory requesters (6, 7), while a comparator circuit (77) which compares addresses in said main storage (10) between vector elements for the main storage access requests is provided in each of storage control circuits (9, 11) for said main storage (10), so that when the addresses have agreed in a vector load mode as a result of the comparison by said comparator circuit (77) a succeeding one of the main storage access requests is processed as a dummy request in the main storage control circuit, while when the addresses have agreed in a vector store mode, a preceding one of the main storage access requests is cancelled in the memory requester (6, 7).

Vector Processor

Background of the Invention

Field of the Invention:

The present invention relates to a vector processor. More particularly, it relates to a vector processor in which high-speed processing is realized by preventing the phenomenon (hereinbelow, called "bank conflict") that, when a main storage is referred to by indirect addressing, accesses to an identical bank among a plurality of banks arise successively and concentratively to give rise to a delay.

Description of the Prior Art:

To the end of processing scientific and technologic computations at high speed, it has been requested to raise the speed of DO loop processing in a FORTRAN program. In order to meet the request for the raised speed, a vector processor comprising a pipelined arithmetic unit and a vector register has been developed (refer to, for example, the specification of U. S. Patent No. 4128880). In the vector processor, the set of data is handled as vector data. More specifically, vector data in a main storage is fetched into the vector register, the plurality of items of vector data stored in the vector register are shifted to the pipelined arithmetic unit, this arithmetic unit performs arithmetic operations under a pipeline control, and the result is written into the vector register. Such processes between the vector register and the pipelined arithmetic unit are carried out by the number of times stipulated in the program, and the final result evaluated in the vector register is written into a designated area in the main storage. These series of processes are not performed sequentially, but are performed by the paralleled control among vector processes generally called the "chaining control." In order to shorten the chaining control and the read and write times of the vector register, elements the operating speeds of which are higher than those of the constituent elements of the main storage are adopted for the vector register, whereby the performance of the vector processor is enhanced.

The vector processor demonstrates the maximum performance when the data items to be operated are successively fetched from the main storage and processed by the pipelined arithmetic unit, whereupon the results are successively stored in the main storage. In the vector processor, however, a machine cycle is designed as short as allowed by hardware technology, so that a marked difference develops between the access time of a RAM device constituting the main storage and the machine cycle of the processing device. In the vector processor at present, the ratio between the machine cycle and the access time of the constituent RAM device of the main storage is 1 : 10 or more. For this reason, the main storage is put into a multi-bank arrangement in order to permit it to follow up the processing speed of the vector processor.

In the vector processor, the vector data elements are processed in parallel by the chaining control. Therefore, when a certain vector element is being fetched from the main storage, another vector element after the end of an arithmetic operation needs to be stored in the main storage. This signifies that a plurality of main storage access requests are simultaneously generated to access the main storage of the multi-bank arrangement. Accordingly, a main storage control circuit is comprised in the vector processor for the purposes of determining the priority levels among the plurality of main storage access requests and performing the buffering control of main storage accesses.

When referring to the main storage through the main storage control circuit, it is sometimes the case that the accesses cannot be effected successively but become intermittently. It is assumed by way of example that the elements $x_i$ of a certain address sequence [x] exist in an identical bank in the main storage when the address sequence has arisen in the vector processor. On this occasion, the access to an address $x_i$ cannot be issued before the access to the direcly preceding address $x_{i-1}$ ends. Therefore, the pitch of the main storage accesses indicated by the sequence [x] becomes equal to the access time of the RAM device constituting the main storage. The delay of the processing pitch is not limited only to the main storage accesses. In a case where the main storage accesses are for fetching data, the processing pitch of the pipelined arithmetic unit is delayed due to the chaining control. On the other hand, in a case where the main storage accesses are for storing data, the end of the operation of the vector processor becomes late due to the delay of the store of the vector data. When such a phenomenon, namely, the bank conflict has occurred, the performance of the vector processor degrades drastically.

The bank conflict arises in the vector processing device in a case wherein "the elements of an address sequence $[x_i]$ are locally existent in an identical bank or a comparatively small number of banks."

The bank conflict is prone to arise in a program in a case where "letting m denote the number of the constituent banks of the main storage or any multiple thereof, a DIMENSION statement is made with m as in the following example:

```
      DIMENSION    A(m, n)
         DO 10 I = 1, ℓ
      10  A(K, I) = .....
```

The above Fortran statement signifies "that computed results on the right sides are successively substituted into the first column, second column, ... and ℓ-th column of the K-th row of a two-dimensional array A (m x n), namely, A(K, 1), A(K, 2), ... and A(K, ℓ)." At this time, the address difference in the main storage for the aforementioned train of array

reference becomes $\underline{m}$ words in accordance with the Fortran, so that accesses concentrate in an identical bank. The bank conflict of this type, however, can be readily avoided by redefining the DIMENSION statement as A(m + 1, n).

In addition, the ensuing program is an example in the case of employing indirect addressing:

```
        DO    100    I = 1, N
    100   A(I) = B(LIST(I)) + .....
```

In the above program, accesses to an array B are determined by data in an array LIST as the indirect addressing. In this case, a bank conflict might occur when the array LIST has an identical value between the proximate elements thereof. Cases of using data in an array for accesses to another array arise frequently in a method employing a sparse large matrix, for example, the finite element method. In the case of such a method, however, there is almost no overlap between address sequence requests, so that the bank conflict occurs at a very log probability.

In this manner, in actual programs, a bank conflict arises infrequently or can be readily avoided even if it has arisen. In the prior-art vector processor, therefore, the main storage control circuit is not additionally provided with a logic circuit for eliminating the bank conflict.

Meanwhile, in the vector processor, the processing performance rises more as the vector length (the number of elements of vector data) is greater. This is because, even when the main storage has the multi-bank arrangement, an operation cannot be started before the first element of a vector is written into the vector register. The overhead involved herein is constant irrespective of the vector length. Now, letting $\underline{y}$ denote a period of time required for the first vector element to be fetched from the main storage into the vector register, $\ell$ denote the vector length to be processed, and $\underline{z}$ the processing pitch of the pipelined arithmetic unit, the performance of the pipelined arithmetic unit during the chaining operation degrades to:

$$\frac{z \cdot \ell}{y + z \cdot \ell} \qquad \ldots\ldots\ldots\ldots\ldots\ldots\ldots\ldots\ldots\ldots\ldots(1)$$

In the vector processor at present, the value of $y$ is 50 - 100. Accordingly, in a case where the vector length $\ell$ to be processed is small ($y > z \cdot \ell$), the degradation of the performance of the vector processor is not negligible.

In the case where the vector length to be processed is small, the vector to-be-processed often appears in the form of a multiply nested loop structure within a program. In the finite element method or the like which is known as the method of partial differential equations commonly used in engineering, the operations of small matrixes, for example,

$$3 \times 3 \ (x \ 3) \qquad \ldots\ldots\ldots\ldots\ldots\ldots\ldots\ldots\ldots\ldots\ldots(2)$$

are often executed in the generation of a stiffness matrix for discretization. Accordingly, when a program is coded with a band width taken as a DO control variable, it becomes a code of a multiply nested loop the innermost loop of which has a vector length of 3. When this code is executed by the vector processor without any change, only a very low processing speed is attained. Heretofore, in such a case, the order of the nested loop has been reversed, or there has been adopted a method called "list vector" is introduced into the program code so as to enlarge the vector length to-be-processed. With such a software technique, however, the program code becomes complicated and very illegible because the variables having been in 1-to-1 correspondence with physical senses are deprived of the correspondence by the converting operation. For this reason, a serious hindrance can occur in program maintenance. To the end of relieving such a disadvantageous aspect, a technique in which the program code is converted on a compiler side has been developed. By way of example, a double loop expressed by:

```
        DO      100     J = 1, M
        DO      100     I = 1, N
100     A(I, J) = B(I) + C(J)
```

is converted into a less multiply nested loop structure as follows:

```
          DO      200     IJ = 1, N*M
      200     A(LIST(IJ), LIST2(IJ))
          = B(LIST(IJ)) + C(LIST2(IJ))
```

Owing to the DO loop structure conversion as stated above, the vector length enlarges, and the degradation of the performance attributed to the overhead time attendant upon the start of the vector processing can be prevented. On the other hand, the reference of the array C in the above example as indicated in terms of element Nos., that is to say, the values of LIST2(IJ) become(s) 1, 1, ... 1, 2, 2, ... 2, .... to give rise to a conspicuous number of bank conflicts. In consequence, the effect of the DO loop structure conversion lessens down to a negligible degree. For the purpose of suppressing the occurrence of the bank conflicts through the DO loop structure conversion, the new DO control variable IJ is set in a random order with respect to the old DO control variables I, J. That is, the interior of a two-dimensional space ([I], [J]) defined by the control variables I, J is obliquely scanned so as to establish I = 1, 2, 3, 4 ... and J = 1, 2, 3, .. in correspondence with IJ = 1, 2, 3, 4, .... This method, however, has the problem that the range of application is limited because the structure conversion processing of the DO loops is of large scale. In order to expand the range of application of the DO loop structure converting operation by the compiler, the two-dimensional space defined by the control variables I, J should better be scanned according to the stipulation of the language, such as I = 1, 2, 3, 4 ... and J = 1, 1, 1, .... Under such background, the necessity has heightened for furnishing the vector processor with a main storage control circuit which does not incur bank conflicts even when the complicated space of a multiply nested loop is pointed to using a list vector.

Summary of the Invention:

An object of the present invention is to solve the problems as stated above, and to provide a vector processor in which the number of vector registers, the number of resources and the number of the constituent banks of a main storage can be freely designed and which can prevent its performance from degrading, in such a way that while the degrees of freedom are held, cases of causing bank conflicts are eliminated in vector load and store processes employing indirect addressing.

The vector processor of the present invention for accomplishing the object consists in a vector processor for processing a vector instruction, comprising a main storage which has a plurality of banks, a plurality of vector registers, a plurality of memory requesters which transfer data from the vector registers to the main storage, and a plurality of vector arithmetic units which subject vector data received from the vector registers, to vector operations and which send operated results to the vector registers, characterized in that stacks which store main storage access requests are provided in said memory requesters, while a comparator circuit which compares addresses in said main storage between vector elements for the main storage access requests is provided in each of storage control circuits for said main storage, so that when the addresses have agreed in a vector load mode as a result of the comparison by said comparator circuit, a succeeding one of the main storage access requests is processed as a dummy request in the main storage control circuit, while when the addresses have agreed in a vector store mode, a preceding one of the main storage access requests is canceled in the memory requester. Further, the present invention is characterized in that the banks of the main storage numbering $\underline{n}$, the vector registers numbering $\underline{m}$, the memory requesters numbering $\ell$, and the vector arithmetic units numbering $\ell$ are determined in any desired combination.

Brief Description of the Drawings:

Fig. 1 is a schematic block diagram of a vector processor showing an embodiment of the present invention;

Fig. 2 is a block diagram of an example of a load requester in Fig. 1;

Fig. 3 is a block diagram of an example of a generator for a maximum-length linear feedback shift register sequence;

Fig. 4 is a block diagram of an example of a main storage control circuit;

Fig. 5 is a block diagram of an example of main storage constituting banks as well as a posterior main storage control circuit;

Fig. 6 is a block diagram of an example of a store requester;

Fig. 7 is a diagram for explaining the shifts of index data from registers to a stack; and

Fig. 8 is a block diagram of an example of a vector register control circuit.

Detailed Description of the Preferred Embodiments:

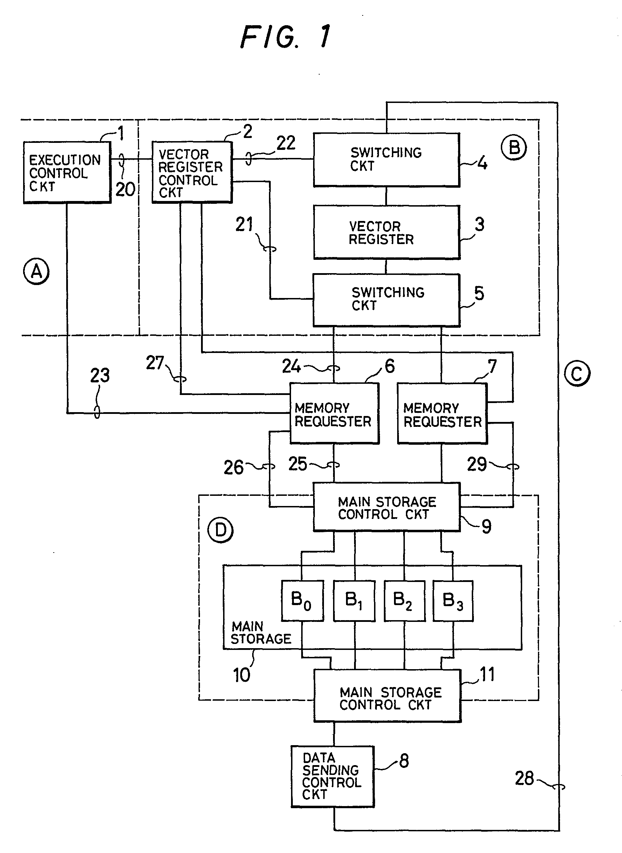

Now, embodiments of the present invention will be described in detail with reference to the drawings. Fig. 1 is a block diagram of a vector processor showing one embodiment of the present invention. In Fig. 1, numeral 1 designates an execution control circuit for the vector processor, numeral 2 a vector register control circuit, numeral 3 a vector register, numerals 4 and 5 switching circuits, numeral 6 a memory requester for a load mode, numeral 7 a similar memory requester for a store mode, numeral 8 a data sending control circuit, numeral 9 a main storage control circuit, numeral 10 a main storage, and numeral 11 a posterior main storage control circuit.

In the present embodiment, a comparator circuit for request addresses is comprised in each of the storage control circuits 9 and 11. The comparator circuit compares the addresses in the main storage between adjacent vector elements. It is additionally provided with a logic portion by which a main storage access to become invalid is canceled when the addresses have agreed. Thus, the embodiment processes at high speed, in case of main storage access requests which give rise to a bank conflict in case of converting a multiply nested loop structure into a less multiply nested loop structure. This will be explained separately on the case of the vector load and the case of the vector store.

In the case of the vector load, the comparator circuit for the request addresses is installed at the next stage to a logic circuit which performs address computations necessary for the reference to the main storage. When the addresses have been found to agree by the comparator circuit, the succeeding request is processed as a dummy request in the main storage control circuit 9. That is, the exclusive OR between the address of the succeeding request and the output of a random number generator is taken so as to prevent the bank conflict between the adjacent requests. Besides, the respective requests have tags affixed thereto to clearly indicate whether or not they are dummy, whereupon they are sent to the main storage 10. In the main storage 10, data items are fetched from the respective banks irrespective of the tags, and they are sent to the main storage control circuit 9 together with the tags. In the main storage control circuit 9, the data items fetched from the main storage 10 are about to be set in a work register. On this occasion, when the tag indicates the dummy request, the set signal of a latch constituting the work register is inhibited. Owing to the inhibition, the data fetched from the main storage 10 vanishes without being set in the work register, and data which corresponds to an immediately preceding valid request remains in the work register. The main storage control circuit 9 sends the data in the work register to the vector register in accordance wiht the presence of the valid signal of the data sent from the main storage 10. Alternatively, however, a method of canceling a memory request is considered. In the vector load mode, a process for storing the data fetched from the main storage in the vector register in the order of vector elements is required.  Therefore, when the memory request is canceled, information indicative of the cancellation must be propagated through the main storage 10 to the main storage control circuit 9 being the fetch port of the main storage in synchronism with the fetch of data.  In the present embodiment, accordingly, the method of canceling the memory request in the vector load mode is not adopted on the ground that increase in the size of hardware is incurred.

Next, in the case of the vector store mode, comparing the request addresses is the same as in the case of the vector load mode.  Unlike the case of the load, however, a preceding request is canceled so as to validate a succeeding store request.  In the vector store mode, merely vector data is stored in the main storage, so that the logic scheme of canceling a memory request can be adopted.

Before describing the detailed operations of the vector processor, logic circuit groups by which processing operations are performed shall be clarified.

In general, the vector processor is classified into the following logic circuit groups (a) - (c):  (a) Logic circuit group whose processes are directed to the vector register. (b) Logic circuit group whose processes are directed to resources for processing vector data, such as pipelined arithmetic units and the memory requesters.  (c) Logic circuit group whose processes are directed to ports for accessing memory elements of multi-bank arrangement within the main storage 10.

Signal transmission or data transfer cannot be directly effected between the constituents of the different logic circuit groups, but propagation signals and data needs must be converted through the switching circuits 4, 5.  In Fig. 1, boundaries in broken lines indicate the interfaces of the logic circuit groups mentioned above.  (A) in Fig. 1 includes the vector processor-execution control circuit 1 which manages the vector register and the resources. Within this space (the space occupied by the logic circuit group), two of the logic circuit groups interact closely. By way of example, a "result" concerning whether or not an instruction can be executed is produced from information on the statuses of the vector register, such as an empty status or chaining status and a simple write status or simple read status, and information on the statuses of the resources, such as busy or idle statuses. This space can be directly supplied with the information items indicative of the statuses of the vector register and the resources. Thus, the space (A) can be said the composite space of two spaces defined by the vector register and the resources, in the sense that the information can be transferred from the two spaces different from each other without the intervention of any converting operation.

In Fig. 1, (B) is the vector register space defined by logic circuits whose processes are directed to the vector register. The space (B), namely, the vector register space includes the vector register control circuit 2, the vector register (here, for the sake of brevity, a plurality of registers are illustrated by a single block) 3, and the switching circuits 4, 5 for carrying information between the spaces of the vector register and the resources.

In Fig. 1, (C) is the resource space defined by logic circuits whose processes are directed to the resources. The load requester 6, the store requester 7 and the data sending control circuit (load request post-processing circuit) 8 are included in the resource space. Incidentally, since the object of the present invention is not to raise the processing speed of vector computations, the pipelined arithmetic units are omitted from Fig. 1 for the brevity of illustration.

In Fig. 1, (D) is a port space defined by logic circuits whose processes are directed to ports. It is constructed of the main storage control circuit 9, main storage 10 and posterior main storage control circuit 11 which effect resource - port conversions. The main storage 10 is assumed to consist of four banks $B_0 - B_3$. Although, in Fig. 1, the number of banks is limited to four for the sake of brevity, this number has no special significance. The reason why the vector processor is divided into several sorts of "spaces" in this manner, is that the largest possible vector registers and pipelined arithmetic units and a large number of banks are installed by the use of limited numbers of packages and back boards.

Now, operations in the case of accessing the main storage with the processing of indirect addressing will be described in conjunction with Fig. 1. In the load process of indirect addressing, the vector processor-execution control circuit 1 decodes an instruction, and it supplies the vector register control circuit 2 through a path 20 with information items such as Nos. of the vector registers which store address information items for main storage accesses stipulated in the operands of the instruction and Nos. of the vector registers into which data items fetched from the main storage are written. On the basis of the information sent thereto through the path 20, the vector register control circuit 2 supplies the switching circuit 5 through a path 21 with information for coupling paths so that data can be transferred between the memory requester 6 and those of the vector registers 3 in which the address data items are stored. At the same time, it supplies the switching circuit 4 through a path 22 with information for connecting data paths between the data sending control circuit 8 which decides on the basis of tag information items whether or not the data items fetched from the main storage are valid and those of the vector registers 3 into which the data items are written. The switching circuits 4 and 5 connect the necessary paths by the use of the path coupling information items sent through the paths 22 and 21, respectively.

When the vector load instruction employing the indirect addressing is to be started, the memory requester 6 receives control information items, such as the processing steps of the address information items read out from the vector registers 3 and Nos. of the vector registers being the sources of addresses, from the vector processor-execution control circuit 1 through a path 23. It synthesizes an address for accessing the main storage, from the control information items and the address sent from the vector register 3 via a path 24, and sends the synthetic address to the main storage control circuit 9 through a path 25.

On the basis of the address sent from the memory requester 6, the main storage control circuit 9 determines that bank of the main storage 10 which is to be accessed. On this occasion, in a case where the bank to be accessed is occupied by an immediately preceding memory request, a succeeding request is reserved in a stack until the preceding memory request is completed. The stacks can be possessed in correspondence with the memory requesters, or in correspondence with the banks, namely, ports of the main storage. Either method has both merits and demerits. More specifically, since the number of the memory requesters is much smaller than that of the banks in the vector processor at present, the stacks provided in correspondence with the memory requesters decreases the size of hardware. Moreover, when the stacks are possessed in correspondence with the memory requesters, the main storage access requests are inevitably issued for the main storage 10 in the order of vector elements, and hence, a control mechanism for writing fetched data into the vector register 3 in the order of the vector elements is disposed. On the other hand, the queue of the main storage access requests is generated in the vector element order in the stack within the memory requester 6. Therefore, in a case where a plurality of memory requesters 6 issued the main storage access requests simultaneously, a conflict takes place between the plurality of main storage access requests. It is assumed by way of example that a main storage access request $A_i$ be issued by a memory requester A at a certain moment and that this access request conflict with a main storage access request $B_j$ issued by a memory requester B. Here, the suffixes $i$ and $j$ correspond to vector elements. Due to the conflict between the different memory requests, either of the main storage access requests needs must be queued for the cycle time of the RAM device. Here, the main storage access request $A_i$ is assumed to be queued. The possession of the stacks corresponding to the memory requesters signifies that, when the request $A_i$ is queued, main storage access requests $A_{i+1}$, $A_{i+2}$, ..... are also queued. Since the main storage access requests $A_{i+1}$, $A_{i+2}$, ..... do not always incur bank conflicts with the main storage access request $B_j$, they are improperly queued in the stacks corresponding to the memory requesters. Such bank conflicts caused by the plurality of memory requests do not occur with the stacks corresponding to the ports. The stacks corresponding to the ports increase the size of hardware and require additional control logics for ensuring the orderliness of vector elements, but they afford the advantage of a higher speed at which the main storage is referred to. However, the method in which the stacks for the main storage access requests are comprised in correspondence with the memory requesters is adopted in view of the capability (capacity) of hardware technology which constructs the vector processor at present.

A path 26 transmits an inhibit signal which indicates that the main storage access request from the memory requester was not accepted by the main storage control circuit 9 on account of "bank busy." Owing to this signal, the main storage access request stays in the stack within the memory requester 6. When no inhibit signal has come to be sent from the main storage control circuit 9, the main storage access request is taken out of the stack again. Letting $\underline{k}$ denote

the number of stages of the stack within the memory requester 6, when the instruction is to be started, the vector register control circuit 2 executes vector register read corresponding to $\underline{k}$ elements. Vector register read at the $(k + 1)$-th element et seq. is controlled by a signal obtained through the conversion from the requester correspondence into the register correspondence, of a signal which indicates that the main storage access request has been sent from the stack of the memory requester 6 to the main storage control circuit 9 up to the vector element permitted by the chanining control logic. The above signal conversion is effected by the memory requester 6, and the propagation of the signals is effected through a path 27.

The main storage access requests corresponding to the memory requesters are converted by the main storage control circuit 9 so as to correspond to the banks, and the banks indicated by the addresses are accessed. Thereafter, the requests are reconverted by the posterior main storage control circuit 11 into fetched data corresponding to the memory requesters. In order to facilitate this conversion, tags are affixed to the main storage access requests at the conversion thereof from the memory requester correspondence into the bank correspondence by the main storage control circuit 9, and the memory requesters from which the access requests have issued are identified with the tags. At this time, since the stacks of the main storage access requests are comprised in correspondence with the main memory requesters, the main storage is accessed in the order of the vector elements, and the tags of the main storage access requests need not accompany any special information for securing the access order.

The fetched data items converted by the posterior main storage control circuit 11 so as to correspond to the memory requesters are decided by the data sending control circuit 8 as to whether or not they are based on valid main storage access requests. The valid data items are sent to the switching circuit 4 through a path 28. In the switching circuit 4, the data items are converted from the memory requester correspondence into the vector register correspondence so that the data items fetched from the main storage can be written into the vector registers 3 stipulated by the instruction.

The above operations are the outline of the vector load process employing the indirect addressing. In the case of the vector store process with the indirect addressing, many parts are common to those of the vector load process, but the following points are different: (a) The processing steps of the vector data fetched from the main storage 10, in the posterior main storage control circuit 11 et seq. are unnecessary. (b) Assuming that the vector store process be executed by the memory requester 7, when the indirect addressing results in the same address as that of the immediately preceding vector element in this requester, the immediately preceding main storage access request can be canceled. (c) When, in the main storage control circuit 9, the main storage access requests corresponding to the memory requesters are to be converted into the access requests corresponding to the banks of the main storage, the memory requesters of store data items need not be identified with tags. However, signals which indicate that the store requests were accepted are sent to the memory requesters through a path 29. (d) The vector register control circuit 2 needs to perform a control so that the store data and address data for generating an indirect address can be synchronously read out from the vector register 3.

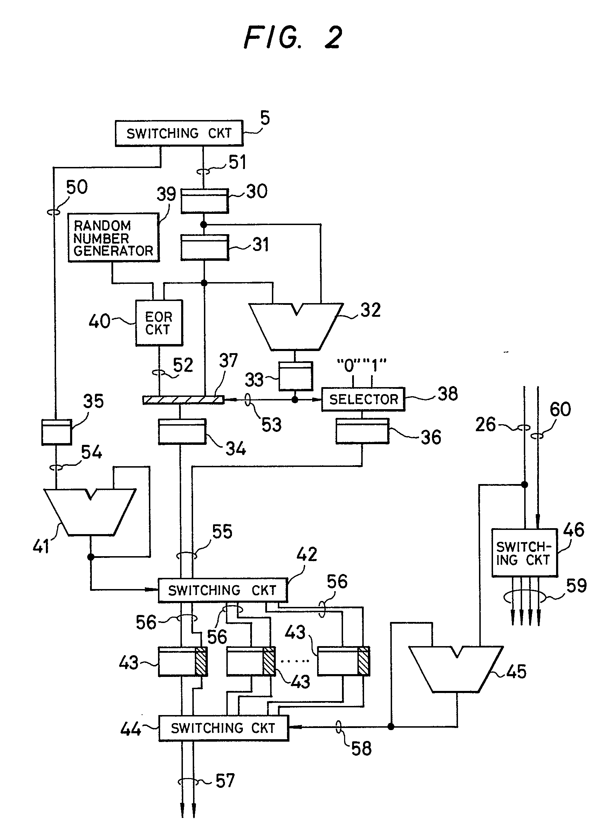

Described above are the outlines of the operations of the vector load/store processes based on the indirect addressing. Referring now to Figs. 2 - 8, various processes and the operations of the respective logic circuits will be described in detail.

Fig. 2 is a block diagram of an example of the memory requester in Fig. 1 for processing a vector load instruction.

In the memory requester 6 in Fig. 2, portions common to those in Fig. 1 have the same numerals assigned thereto. Indirect address data read out from the vector register 3 to the switching circuit 5 and a valid signal indicative of the validity of the data are synchronously sent to respective paths 51 and 50. The indirect address data is set in a register 30 when the valid signal is "1." When the indirect address data of the next vector element is sent to the path 51, the data in the register 30 is shifted to a register 31 and the data on the path 51 is stored in the register 30. In this manner, the data in the register 30 corresponds to the vector element $X_{i+1}$, and the data in the register 31 is the indirect address data corresponding to the vector element $X_i$.

Outputs from the registers 30 and 31 are checked by a comparator circuit 32. When the outputs of both the registers 30 and 31 are equal, "1" is set in a register 33, and when they are not equal, "0" is set therein. Here, the initial value of the register 33 is "0." In the case where the result of the comparator circuit 32 is set in the register 33, the indirect address data is set in a register 34 through a selector 37. Simultaneously, the valid signal of the indirect address data is set in a register 35. A register 36 holds tag information indicating whether or not the indirect addressing is valid. This tag is also set in synchronism with the set timing of the register 34. Here, it is assumed that the validity and invalidity of the data of the indirect address be respectively indicated by "1" and "0" and that a selector 38 select an input on a side "1" when the content of the register 33 is "0."

A logic circuit 39 is a generator for the pseudorandom numbers of the M series (Maximum-length linear feedback shift register sequence). This pseudorandom number generator generates the train of random numbers in correspondence with respective bits, and it can eliminate a case where all the bits become "0," when designed with phases shifted in the bit correspondence. The data items of the random number generator 39 and the indirect address are subjected to the exclusive OR by an exclusive OR circuit 40, and the result is sent to a path 52.

Here, the M sequence will be briefly explained. Let's consider the following linear recurrence series:

$$a_1 = h_1 a_{i-1} + h_2 a_{i-2} + \ldots + h_n a_{i-n} \quad (\text{mod } 2)$$

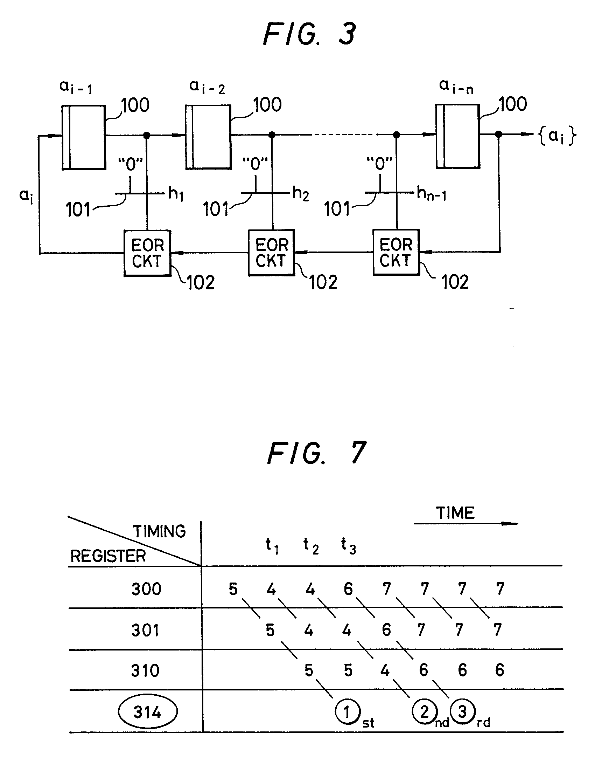

where $h_j$ ($j = 1, 2, \ldots n - 1$) = 0 or 1, $h_n = 1$ and $i \geq n$. This linear recurrence series can be generated by a logic circuit shown in Fig. 3. In this figure, numerals 100 indicate registers, numerals 101 selectors, and numerals 102 exclusive OR circuits. When the coefficient $\underline{h}$ of the linear recurrence series is 0 (zero), the selector 101 selects a side "0," and when the coefficient is 1 (one), the selector connects the output of the corresponding register 100. The logic circuit of Fig. 3 provides 0/1 patterns of up to $2^n - 1$ periods unless the contents of all the registers are "0" under the initial state. The coefficient $h_j$ affording the maximum period has already been evaluated in correspondence with the number $\underline{n}$. A series generated by the linear recurrence series-logic circuit with this coefficient is the M series. Accordingly, a plurality of random number generators of the M series are disposed in parallel, and the phases of the respective generators are shifted, whereby the random number generator can be designed so that the number whose bits are all "0" may not arise.

The processing operation of the memory requester in the case of the indirect addressing in Fig. 2 will be described again. When the value "1" indicative of the agreement between the addresses corresponding to the vector elements $X_i$ and $X_{i+1}$ is set in the register 33, the selector 37 selects a path 52 side through a path 53 and sets in the register 34 the result of the exclusive OR operation between the random number of the M series and the value in the register 31. Simultaneously, the selector 38 sets the value "0" in the register 36 so as to generate a tag which indicates the invalidity of a main storage access request. As regards the generation of the tag, in a vector processing device comprising a plurality of memory requesters, also information for distinguishing whether the main storage access request is load or store needs to be added to the tag. However, when the memory requesters are dedicated to load/store, the above information may well be generated by the main storage control circuit. In the present embodiment, load/store is distinguished on the side of the main storage control circuit. However, in a case where the memory requester is designed so as to be used for both load/store, the information needs to be generated on the memory requester side.

The register 35 is provided for the timing adjustment between the valid signal and the data signal. The valid signal sent to a path 54 acts on a counter 41 to subject its internal status to +1. The internal status of the counter 41 changes cyclically. The output of the counter 41 acts on a switching circuit 42 so as to connect a path 55 to any of paths 56.

A group of registers 43 are stacks which are provided in correspondence with the memory requesters. For the brevity of the drawing, the register 43 is supposed to hold an address and a tag, and the part of the tag is indicated by a hatched part. The vector register control circuit (refer to Fig. 1) 2 is controlled so that the address data items from the vector registers may be sent so as to correspond only to the stacks indicated by the registers 43. Therefore, whether or not the address data items give rise to a stack overflow is not controlled on the memory requester side. The address data and tag stored in the stack are sent to a path 57 through a switching circuit 44 at the next timing. The path 57 is connected to the main storage control circuit 9 in Fig. 1.

When the main storage access request is accepted by the main storage control circuit 9, a signal significant of reception comes in via the path 26. This signal counts up a counter 45. Also the counter 45 has its internal status changed cyclically. The output of the counter 45 controls the switching operation of the switching circuit 44 via a path 58.

The signal sent through the path 26 is input to a switching circuit 46 which converts the spaces of the memory requester and the vector register, and reports it to the vector register being the address source of the pertinent memory requester that the main storage access request has been sent to the main storage control circuit, so an address element corresponding to the next vector element can be now read out from the vector register 3. A path for sending this information is a path 59. A path for sending this information is a path 59. This control via the paths 26 → 59 dispenses with a control logic for preventing one of the counters 41 and 45 from outrunning the other. A path 60 is a path through which information indicative of the vector register as the address source of the memory requester is set when the memory requester is to be started.

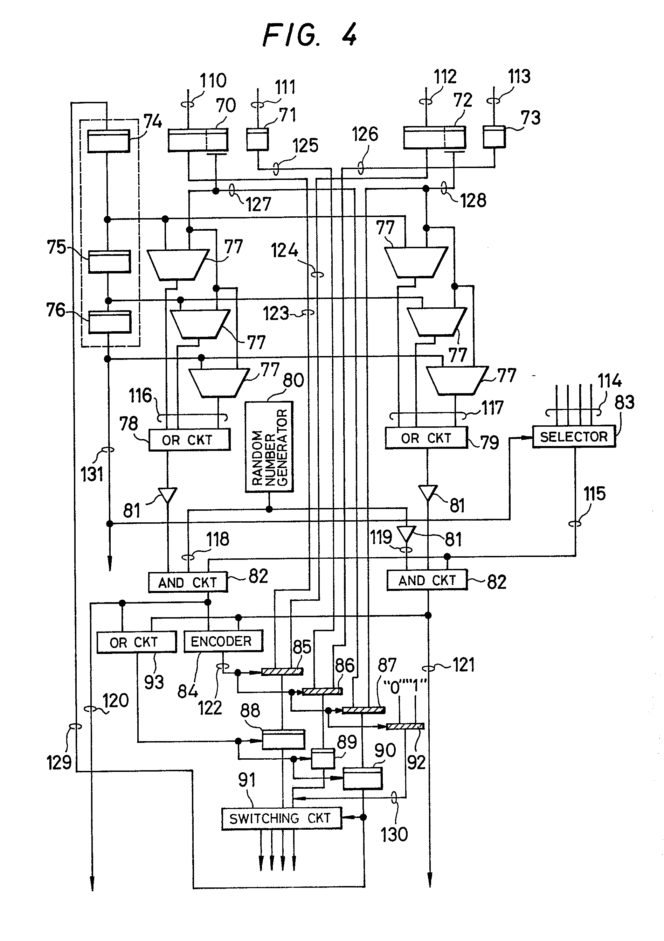

Fig. 4 is a block diagram of an example of the main storage control circuit in Fig. 1. The main storage control circuit 9 generates a tag which indicates whether the main storage access request is load or store. In Fig. 4, logics are schemed so as to process inputs from two memory requesters for load/store. However, the limitation to the two requesters is for simplifying the description, and more requesters may well be provided. Among signal lines connected to the main storage control circuit 9, paths 110 and 111 carry inputs from the memory requester for the load process, and paths 112 and 113 are input paths from the memory requester for the store process. The inputs on the store side include store data in addition to an address and a tag. In the main storage control circuit 9, however, the store data is not pertinent to the control of the main storage control circuit 9, and it is processed quite similarly to the tag to pass through the control circuit. Therefore, logic portions concerning the store data shall be omitted from Fig. 4.

Referring to Fig. 4, the address outputs from the memory requesters are respectively set in registers 70 and 72 through the path 110 in the load mode and the path 112 in the store mode. Also the tags are respectively set in registers 71 and 73 through the paths 111 and 113. A path 114 is a path from the main storage, for reporting that the process of the main storage access has ended. Since the main storage is constructed of the plurality of banks, the path 114 is divided in a plurality of signal lines. Among signals on the path 114, only information corresponding to the bank for which the main storage access request has been issued is selected by a selector 83 and is sent to a path 115. The selective operation compensates for the difference between the machine cycle of the main storage control circuit 9 and the cycle time of the RAM device constituting the main storage device 10.

Here, let's consider conditions under which the access request can be issued for the main storage 10. The main storage 10 has the multi-bank arrangement, and each bank is operating in the cycle time longer than the machine cycle. Therefore, which bank is processing the main storage access request needs to be managed by the main storage control device. To this end, the copies of the addresses sent to the main storage 10 needs to be held in the stacks within the main storage control circuit 9. In Fig. 4, these stacks are indicated by a group of registers 74, 75 and 76 enclosed with dotted lines. Although, in Fig. 4, the stacks are illustrated as three stages for the brevity of the drawing, they are required in the number of the banks of the main storage of the vector processor. Field parts 127 and 128 which determine the banks of the main storage, in the address data of the main storage access requests are compared by comparator circuits 77 with the address information items from the respective requesters. It is assumed here that the output of the comparator become "1" upon the agreement of the addresses, whereas it become "0" upon the disagreement. The outputs of the respective comparator circuits 77 are sent to paths 116 and 117 and are input to OR circuits 78 and 79. When the output of the OR circuit 78 or 79 is "1," a reference request within the main storage 10 and the main storage access request sent from the memory requester point to the identical bank, and hence, the succeeding main storage access request from the memory requester cannot be issued in the main storage 10. For the same reason, when the output of the OR circuit 78 or 79 is the opposite signal ("0"), it is meant that the main storage access request can be issued. In this case, however, it can occur that a plurality of main storage access requests whose sources are the plurality of memory requesters can be simultaneously issued. On this occasion, for the purpose of equally selecting either of the main storage access requests, outputs from a 1-bit random number generator 80 are rendered opposite to each other and sent to paths 118 and 119, and one of the main storage access requests is selected through the AND with such a signal value. In order to send the opposite signals, three inverters 81 are connected on the output sides of the OR circuits 78, 79 and the random number generator 80. Incidentally, the 1-bit random number generator may be the random number generator of the M series as shown in Fig. 3. The opposite signals are input to AND circuits 82. These AND circuits 82 produce conditions on the propriety of the issue of the main storage access requests. The reason why the path 115 is connected to the AND circuits 82 is that, in a case where the number of the banks of the main storage 10 cannot be set larger than the ratio between the cycle time of the main storage and the machine cycle of the vector processing device on account of hardware and economical restrictions, a timing adjustment is performed for permitting the next main storage access request to be accepted when the bank of the main storage has emptied. Accordingly, outputs from the AND circuits 82, namely, signals on paths 120 and 121 indicate the establishment of the conditions under which the access requests can be issued for the main storage, and they simultaneously indicate the establishment of the conditions under which the next main storage access requests may be issued from the memory requesters to the main storage control circuit 9. Thus, the path 120 is equivalent to the path 26 in Figs. 1 and 2, and the path 121 is equivalent to the path 29 similarly. The signals on the paths 120 and 121 are sent to the memory requesters, and are simultaneously input to an encoder 84. Here, a signal for determining which of the main storage access requests of the plurality of memory requesters is to be selected is synthesized. The output of this encoder 84 is sent to a path 122 and acts on selectors 85, 86 and 87. The selector 85 selects either of paths 123 and 124, thereby to select either of the addresses of the main storage access requests issued by the plurality of memory requesters and to set it in a register 88. The selector 86 selects either of tag information items on paths 125 and 126 as annexed to the main storage access requests, and sets it in a register 89. As the data items on the paths 127 and 128, those fields of the address parts of the main storage access requests which determine the banks of the main storage are cited. The selector 87 selects either of the field information items, and sets it in a register 90. The set conditions of the registers 88, 89 and 90 are established by taking the logical OR of the outputs of the AND circuits 82 by means of an OR circuit 93. The information of the register 90 acts on a switching circuit 91 and causes it to send the address and the tag information to the corresponding bank of the main storage. The data of the register 90 is set in the register 74 through a path 129 at the next timing. The data set in the register 74 shifts to the registers 75 → 76 every machine cycle, and actuates the selector 83 through a path 131. The path 131 is also connected to the posterior main storage control circuit 11. Meanwhile, the information on the path 122 for selecting the memory requester acts on a selector 92 and generates on a path 130 a kind of tag information for distinguishing whether the main stroage access request of the requester source is load or store. In Fig. 4, the path 130 is illustrated as adding its information to the tag information within the register 89.

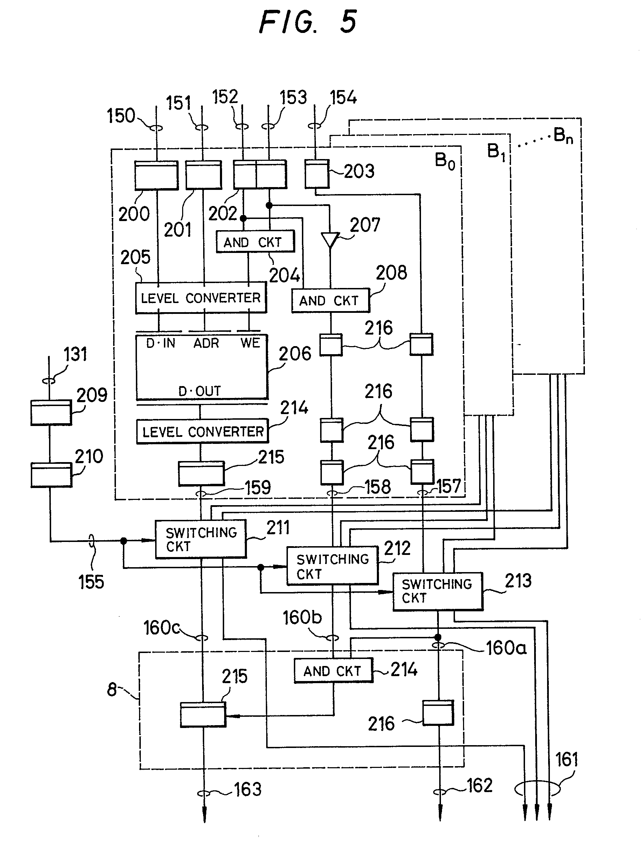

Fig. 5 is a block diagram exemplifying the practicable arrangements of the main storage 10, posterior main storage control circuit 11 and data sending circuit 8 in Fig. 1. In Fig. 5, the banks of the main storage 10 are portions written as $B_i$ within the frames of dotted lines. Logics in the portions $B_i$ do not depend on the suffixes $i$. The store data and address data of the main storage access request, the tags indicating the validity and invalidity of the access requests, and the valid signals indicating the presence of the access requests are respectively sent from the main storage control circuit 9 shown in Fig. 4 to paths 150 - 154 in correspondence with the banks of the main storage. In a case where the main storage access request is load, the store data is insignificant data. The data items, the tag and the valid signal are stored in registers 200 - 203.

The tag information of main storage access stored in the register 202 is "1" when the access request is valid, and is "0" when the access request is invalid. Besides, it is "0" for the load process and is "1" for the store process. These two sorts of tag information have their logical AND taken by an AND circuit 204. Thus, the write enable signal of a RAM device which becomes "1" only in case of the valid store process is generated and is input to the WE terminal of the RAM device 206 through a level converter 205. Also the store data and address of the main storage access request are input to the D.IN terminal and ADR terminal of the RAM device 206 through the level converter 205. Meanwhile, the tag indicative of the validity of the data and the inverted signal of the tag of load/store have their logical AND taken by an AND circuit 208. The output of this AND circuit 208 becomes "1" only when the main storage access is the valid load. Here, numeral 207 denotes an inverter.

The information sent to the path 131 from the main storage control circuit 9 in Fig. 4 indicates the bank of the main storage 10 from which data can be received at the entrance of the posterior main storage control circuit 11. Registers 209 and 210 disposed between the path 131 and a path 155 are existent for making the correction between the ratio of the cycle time of the main storage 10 to the machine cycle of the vector processing device and the number of the constituent banks of the main storage 10.

An output from the terminal D.OUT of the RAM device 206 has its signal level converted by a level converter 214, and the resulting signal is stored in a register 215. Since the RAM read operation is slow, a group of delay registers 216 are provided. Signals on output paths 157, 158 and 159 from each bank of the main storage 10 are an order signal which indicates whether or not the pertinent instruction signal is valid, a command signal which indicates whether or not the load request from the memory requester is issued, and a read data signal, respectively. Using the signal on the path 155, the aforementioned three sorts of signals in the space of logics concerning the bank of the main storage 10 are converted into signals usable in a space concerning the resource by means of switching circuits 213, 212 and 211, respectively. Therefore, paths 160 and 161 are connected to the corresponding memory requester. In Fig. 5, suffixes a, b and c are attached to the paths 160, and they identify the order, command and data signals respectively.

The signals on the paths 160a and 160b have their logical AND taken by an AND circuit 214, and the set signal of a register 215 is generated. More specifically, when both the signals on the paths 160a and 160b are "1" and the main storage access request of a vector load instruction is valid, the data fetched from the main storage is set in the register 215. In contrast, when the order signal on the path 160a is "0" and the access request is dummy, the set signal is not generated, so that the data fetched from the main storage is not set in the register 215, either. In this case, as the data in the register 215, data which corresponds to the immediately preceding vector element is reserved. A register 216 is provided for a timing adjustment. Outputs from the registers 215 and 216 are respectively sent to the switching circuit 4 in Fig. 1 through paths 163 and 162.

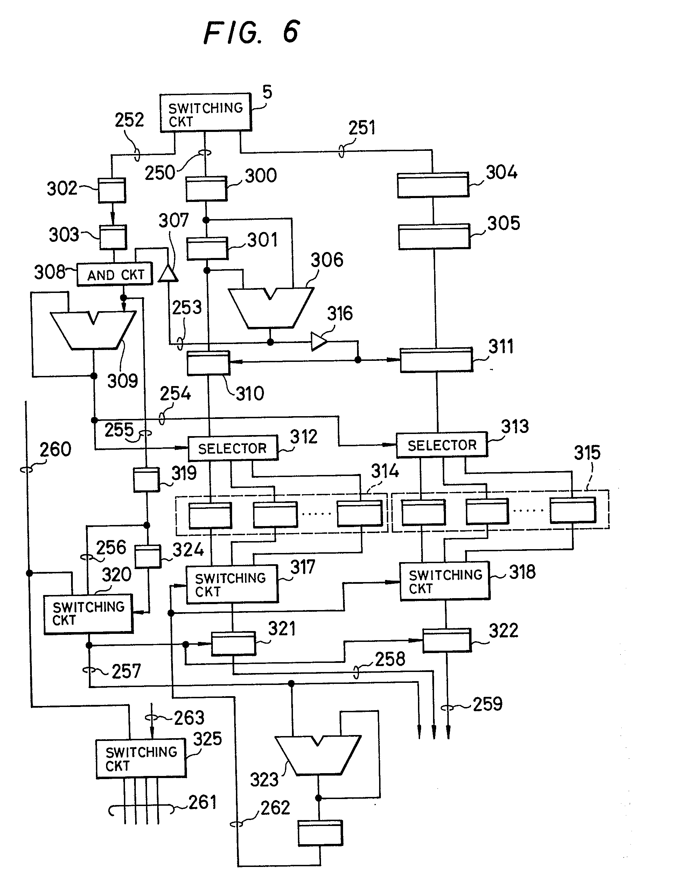

Fig. 6 is a block diagram of an example of the store requester 7. The processing operations of the store requester in the case of indirect addressing will be described with reference to Fig. 6.

Referring to Fig. 6, indirect address data (hereinbelow, called "index") and store data originating from the vector register described in the operand of a vector store instruction are respectively sent to paths 250 and 251 from the switching circuit 5 shown in Fig. 1, while at the same time the valid signal of these data items is sent to a path 252. The index data is once set in a register 300, and is shifted to a register 301 at the next timing. At this time, the index of the next vector element is set in the register 300. In synchronism with the register setting operations of the index, also the valid signal is set in a register 302 and then a register 303, and also the store data is set in a register 304 and then a register 305. A comparator circuit 306 compares the index data items in the registers 300 and 301. When, as a result, the data items agree, "1" is sent to a path 253. The signal on the path 252 is inverted by an inverter 307, and the resulting signal is input to an AND circuit 308. In consequence, when the indexes agree between the adjacent vector elements to be stored, the valid signal of the index corresponding to the preceding vector element is inhibited as the output of the AND circuit 308. The output of the AND circuit 308 increments the value of a counter 309 by +1. The counter 309 is assumed to be initialized to "0" when the vector store instruction is to be started. This value of the counter 309 is not updated in the case of the agreement of the indexes between the vector elements to be stored. The counter 309 is a cyclic counter whose content is updated when the disagreement of the indexes has been detected. The output of the comparator circuit 306 is inverted by an inverter 316, and upon the disagreement of the index data items set in the registers 300 and 301, the inverted signal is used as a set signal in the case of shifting the index data from the register 301 to a register 310 at the next timing. Likewise, regarding the shift of the store data between registers, the inverted output of the comparator circuit 306 is used as the set signal of the register 311.

The output of the counter 309 acts on switching circuits 312 and 313, and the index and store data in the registers 310 and 311 are respectively shifted to those registers in stacks 314 and 315 which are indicated by the counter value.

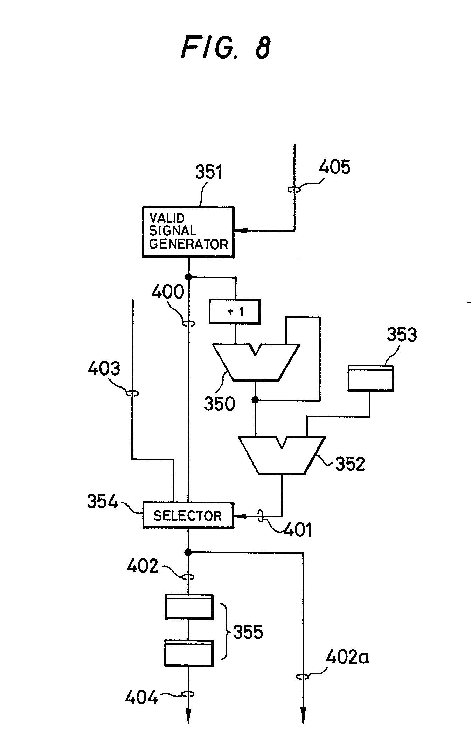

For the sake of clarity, the shift of the index data from the register 300 to the stack 314 described above will be detailed in conjunction with Fig. 7. This figure lists the correspondence between Nos. of the registers and index values stored in the registers, with the time taken on the axis of abscissas. Regarding the stack 314, its No. is encircled in order to distinguish the stack from the registers, and Nos. of those registers within the stack in which index values are stored are indicated instead of the index values. Referring to Fig. 7, at a timing $t_1$, the contents of the registers 300 and 301 are compared to generate the set signal of the register 310. Since, in this case, the values of the indexes are different, the value of the register 301 is set in the register 310 at the next timing $t_2$. At the timing $t_2$, the contents of the registers 300 and 301 are compared. Since, however, the index values are identical in this case, the set signal is not generated and the value of the register 310 remains unchanged. Meanwhile, the result obtained by comparing the contents of the registers 300 and 301 at $t_1$ has its AND taken with the valid signal and then increments the value of the counter 309 by +1. The time of this countup is $t_2$ identical to the set time of the register 310. At the next timing $t_3$, using the counter value, the index value is set in the register within the stack 314 corresponding to the counter value by means of the selector 312. Also the store data is processed quite similarly to the processing of the index data. Owing to these operations, when the index values are the same, the succeeding store data is taken out as valid data. In Fig. 7, oblique lines drawn between the same index values are intended to emphasize pipelined operations.

Referring back to Fig. 6, the valid signal having acted on the counter 309 passes through a delay register 319 via a path 255 and becomes the set signals of registers 321 and 322 through a switching circuit 320. It is assumed that, when the memory requester has been started for the store process, paths 256 and 257 be connected by the switching circuit 320 owing to a reset operation at the start of the requester. Besides, the output of a counter 323 is assumed to be +1 under the initial state.

The values of the registers 321 and 322 are respectively sent to paths 258 and 259 in synchronism with the valid signal of the path 257. The signal on the path 256 is set in a register 324. The output of this register 324 acts on the switching circuit 320, to connect a path 260 and the path 257 after the first valid signal has been sent to the path 257. The initial state of the register 324 is "0." The path 260 is supplied with "1" when the main storage access request has been accepted by the main storage control circuit (refer to Fig. 4). This signal is used to produce the valid signals of the second vector element et seq. On the other hand, the valid signal sent to the path 257 counts up the counter 323 by +1. This counter 323 is a cyclic counter. The output of the counter 323 acts on switching circuits 317 and 318 through a path 262, and points to Nos. of those registers in the stacks 314 and 315 which are to be selected for the next valid signal.

The mutual relationship between the counters 309 and 323 is managed by the vector register control circuit and the main storage control circuit, and it is the same as in the case of the memory requester for the load process shown in Fig. 2 that a logic circuit for examining the mutual relationship need not be comprised.

The signal on the path 260 functions equivalently to the switching circuit 46 of the load requester in Fig. 2. That is, the signal in the resource correspondence processed by the main storage control circuit is converted into the signal in the register correspondence. The output path 261 of a switching circuit 325 is connected to the vector register control circuit which manages the two vector registers storing the index data and the store data respectively. A path 263 is a path which is supplied at the start of the memory requester with information indicative of the vector register source whose index and store data are to be used.

Fig. 8 is a diagram for explaining an example of the practicable arrangement of the vector register control circuit. Among the numerous controls of the vector register control circuit, a mechanism for generating the valid signal of read data as pertains to the present embodiment will be described. When the vector register control circuit is started, the content of a counter 350 is reset. Subsequently, a valid signal generator 351 is started to send a valid signal to a path 400 every machine cycle. The valid signal generator 351 may be a crystal oscillator likewise to a timing generator. Alternatively, the valid signal may well be synthesized from timing pulses. The valid signal sent to the path 400 acts on the counter 350 to increment its value by +1. The output of the counter 350 is compared with the content of a register 353 by a comparator circuit 352. The value of this register 353 is equal to the number of stages of the request stacks of the main storage control device (refer to 43 in Fig. 2 and 314, 315 in Fig. 6).

When the agreement is taken by the comparator circuit 352, "1" is sent to a path 401. This signal acts on a selector 354 to break the connection (initial state) of the path 400 and a path 402 and to connect a path 403 and the path 402. The path 403 propagates a signal which signifies that the processing has been performed in the main storage control circuit. Owing to this switching operation, the valid signals are generated compulsorily for the first $\ell$ vector elements since the issue of the read request for the vector register, and they are generated according to the processing situation of the main storage control circuit at the $(\ell + 1)$-th element et seq. Owing to such a control through the vector register, the stack management control in the memory requester can be simplified, and the number of stages of the stacks within the memory requester can be effectively used.

The valid signal sent to the path 402 passes through a path 402a and enters the address computation circuit of the vector register control circuit for reading the RAM device. The address computation portion of the vector register control circuit shall be omitted from description because it is impertinent to the main storage control system referred to in the present embodiment. Registers 355 are provided for delaying the valid signal in order to process an address computation for reading the vector register, etc. A path 404 is provided for propagating the valid signal to the memory requester.

When the vector register is performing the chaining operation, the read address of the RAM must not outrun the write address. This limitation may be set in such a way that, when generating the RAM read address, it is compared with the RAM write address, and that a signal resulting upon the agreement is input to the valid signal generator 351 through a path 405, the input signal being used for temporarily inhibiting the generation of the valid signal.

As described above, according to the present invention, in a vector processing device, the number of vector registers, the number of resources and the number of the constituent banks of a main storage can be freely designed, and while the degree of freedom is held, cases of giving rise to bank conflicts which degrade the performance most conspicuously in vector load and store processes employing indirect addressing can be eliminated. Accordingly, the bank conflicts are relieved in main storage accesses employing the indirect addressing, with the result that the conversion of a multiply nested loop into a less multiply nested loop can be performed without disordering an area in which a DO control variable moves.

CLAIMS:

1.  A vector processor comprising a main storage (10) which has a plurality of banks ($B_0...B_3$), storage control circuits (9, 11) which control store and fetch of said main storage (10), a plurality of vector registers (3), a plurality of memory requesters (6, 7) which transfer data between said vector registers (3) and·said main storage (10), and a plurality of vector arithmetic units which subject vector data received from said vector registers (3) to vector operations and which send operated results to said vector registers; each said memory requester (6, 7) including stacks which store a main storage access request; each said storage control circuit (9, 11) for said main storage (10) including a comparator circuit (77) which compares addresses in said main storage (10) between vector elements for the main storage access requests, and a logic circuit (78, 79, 81, 82) which cancels a main storage access that becomes invalid when the addresses in said main storage (10) between the adjacent vector elements have agreed as a result of the comparison in said comparator circuit.

2.  The vector processor of claim 1, wherein said logic circuit (78, 79, 81, 82) is a circuit which processes the succeeding main storage access request as a dummy request when, in a vector load mode, the addresses have agreed as the result of the comparison by said comparator circuit (77).

3.  The vector processor of claim 1, wherein said logic circuit (78, 79, 81, 82) is a circuit which cancels the preceding main storage access request within said memory requester (6, 7) when, in a vector store mode, the addresses have agreed as the result of the comparison by said comparator circuit (77).

4. The vector processor of any of claims 1 to 3, wherein said main storage (10) is constructed on $n$ banks, said vector registers (3) are comprised in a number $m$, and said memory requesters (6, 7) and said vector arithmetic units are respectively comprised in a number $\ell$ $(n \neq m \neq \ell)$; logic circuit groups which have three sorts of block structures are provided for the above three sorts of resources; and in transmitting a signal from the i-th block to the j $(\neq i)$-th block, a conversion process is performed by a switching circuit (211...213), thereby to determine the combination of the numbers $n$, $m$ and $\ell$ at will.

5. The vector processor of any of claims 1 to 4, wherein said storage control circuit comprises means to affix a tag indicative of validity or invalidity to the main storage access request in order to regard the succeeding main storage access request of the agreeing addresses as a dummy request in case of a vector load process; means to replace the address with a random number in case of the invalid request, thereby to transform the main storage access requests into main storage access request train in which no bank conflict arises between the adjacent vector elements; and means to put information held on the tag, into a set signal of a latch circuit constituting a register installed in a control circuit for performing a process in which data fetched from a RAM constructing each said bank of said main storage is written into said vector register, and to store only the vector data fetched from the bank in compliance with the valid main storage access request, in said vector register by means of a control circuit for controlling the set signal.

## FIG. 1

FIG. 2

0232827

2/7

## FIG. 3

## FIG. 7

# FIG. 4

5/7

FIG. 5

FIG. 6

FIG. 8